# EUROPEAN PATENT SPECIFICATION

(11) **EP 2 096 794 B1**
(45) Date of publication and mention of the grant of the patent: **21.03.2012**
(21) Application number: 08839531.4
(22) Date of filing: 09.10.2008
(51) Int. Cl.: H04L 12/26

(54) **MONITORING METHOD, DEVICE AND SYSTEM**
ÜBERWACHUNGSVERFAHREN, -VORRICHTUNG UND -SYSTEM
PROCÉDÉ, DISPOSITIF ET SYSTÈME DE SURVEILLANCE

(30) Priority: 11.10.2007 CN 200710163708
(43) Date of publication of application: 02.09.2009
(73) Proprietor: Huawei Technologies Co., Ltd., Longgang District, Shenzhen Guangdong 518129 (CN)
(72) Inventor: CHEN, Rui, 518129, Shenzhen (CN)
(74) Representative: Kreuz, Georg Maria
(86) International application number: PCT/CN2008/072633
(87) International publication number: WO 2009/049538

(56) References cited:
- EP-A- 0 948 163
- WO-A-2006/101397
- CN-A- 1 625 178
- CN-A- 1 642 117
- CN-A- 1 937 545
- CN-A- 101 150 455
- US-B1- 6 434 626
- ROACH DYNAMICSOFT A B: "Session Initiation Protocol (SIP)-Specific Event Notification; rfc3265.txt" IETF STANDARD, INTERNET ENGINEERING TASK FORCE, IETF, CH, 1 June 2002 (2002-06-01), XP015009043 ISSN: 0000-0003
- JEHUN RHEE ET AL: "Mobile service provision system based on sensor and SIP event notification mechanism" COMMUNICATIONS, 2004 AND THE 5TH INTERNATIONAL SYMPOSIUM ON MULTI-DIME NSIONAL MOBILE COMMUNICATIONS PROCEEDINGS. THE 2004 JOINT CONFERENCE O F THE 10TH ASIA-PACIFIC CONFERENCE ON BEIJING, CHINA 29 AUG.-1 SEPT. 2004, PISCATAWAY, NJ, USA,IEEE, US LNKD, vol. 2, 29 August 2004 (2004-08-29), pages 740-743, XP010765061 ISBN: 978-0-7803-8601-3
- WU CHOU ET AL: "Web Service for Tele-Communication" TELECOMMUNICATIONS, 2005. AICT-ICIW '06. INTERNATIONAL CONFERENCE ON I NTERNET AND WEB APPLICATIONS AND SERVICES/ADVANCED INTERNATIONAL CONFE RENCE ON GUADELOPE, FRENCH CARIBBEAN 19-25 FEB. 2006, PISCATAWAY, NJ, USA,IEEE, 19 February 2006 (2006-02-19), pages 88-88, XP010898643 ISBN: 978-0-7695-2522-8
- JINGYU ZHOU ET AL: "An Efficient Topology-Adaptive Membership Protocol for Large-Scale Cluster-Based Services" PARALLEL AND DISTRIBUTED PROCESSING SYMPOSIUM, 2005. PROCEEDINGS. 19TH IEEE INTERNATIONAL DENVER, CO, USA 04-08 APRIL 2005, PISCATAWAY, NJ, USA,IEEE, 4 April 2005 (2005-04-04), pages 57B-57B, XP010785549 ISBN: 978-0-7695-2312-5
- ETRI (BYEONG-OK KWAK ET AL: "Discussion of Parlay X Service Provision Web Service" 3GPP DRAFT; TDOC_SERVICEPROVISION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG5, no. Seoul; 20070502, 2 May 2007 (2007-05-02), XP050042202
- TAOYING LIU ET AL: "Clustone: A service-based cluster middleware" PARALLEL AND DISTRIBUTED COMPUTING, APPLICATIONS AND TECHNOLOGIES, 200 3. PDCAT'2003. PROCEEDINGS OF THE FOURTH INTERNATIONAL CONFERENCE ON AUG. 27 - 29, 2003, PISCATAWAY, NJ, USA,IEEE, 27 August 2003 (2003-08-27), pages 76-79, XP010661236 ISBN: 978-0-7803-7840-7

## Description

### Field of the Invention

The present invention relates to network communication technologies, and in particular, to a monitoring method, device and system.

### Background of the Invention

With the development of the Next Generation Network (NGN) and IP Multimedia Subsystem (IMS), services can run independently of a network. A service may run independently on an application server and exchange signaling with a core network element over the Session Initiation Protocol (SIP).

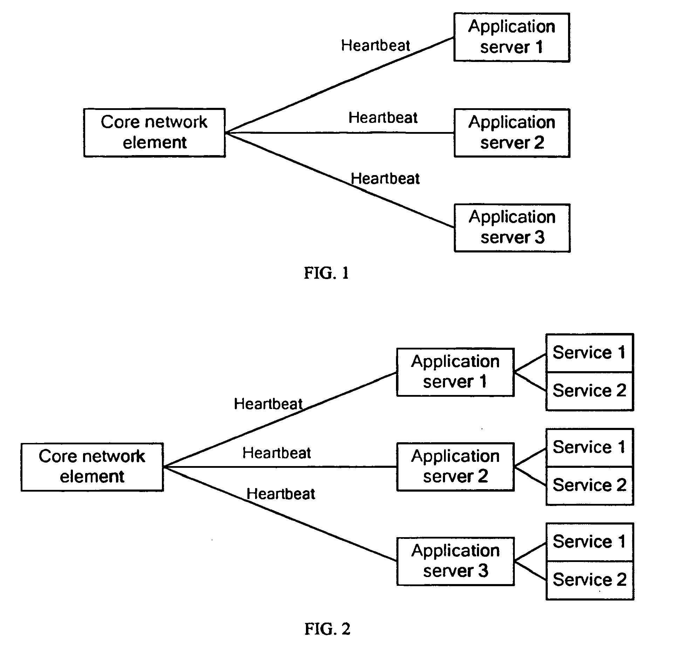

To assure reliability of communications between communication devices, a heartbeat mechanism is adopted between the core network element and the application server to check the availability of the peer end. FIG. 1 is a schematic drawing illustrating the network structure of a SIP-based device level heartbeat detection mechanism. In FIG. 1, the device level heartbeat detection is realized by means of SIP-based OPTIONS messages between the core network element and the application server. The core network element sends a heartbeat message to the application server. If a heartbeat response message is not received from the application server within a specified time, the core network element decides that the application server is unreachable. Later, the core network element will not send messages that are previously processed by the application server to the application server until the application server recovers to normal, for example, until the application server returns a heartbeat response message to the core network element.

In the device level heartbeat detection mechanism shown in FIG.1, multiple services may be deployed on one application server, which may be a SIP server. In addition, the same services may be deployed in redundancy on multiple application servers. FIG. 2 is a schematic drawing illustrating the network structure of a device level heartbeat detection mechanism where services are deployed in redundancy. The same services, such as service 1 and service 2, may be deployed on application servers 1, 2 and 3. When one application server fails to return a heartbeat response to the core network element in time, the core network element may send subsequent service related messages to other application servers for processing. In the device level heartbeat detection mechanism shown in FIG 2, because the same services, service 1 and service 2, are deployed on multiple application servers, even if one application server works normally, the core network element may still send all service related messages to other application servers for processing. As a result, loads over different application servers may be imbalanced.

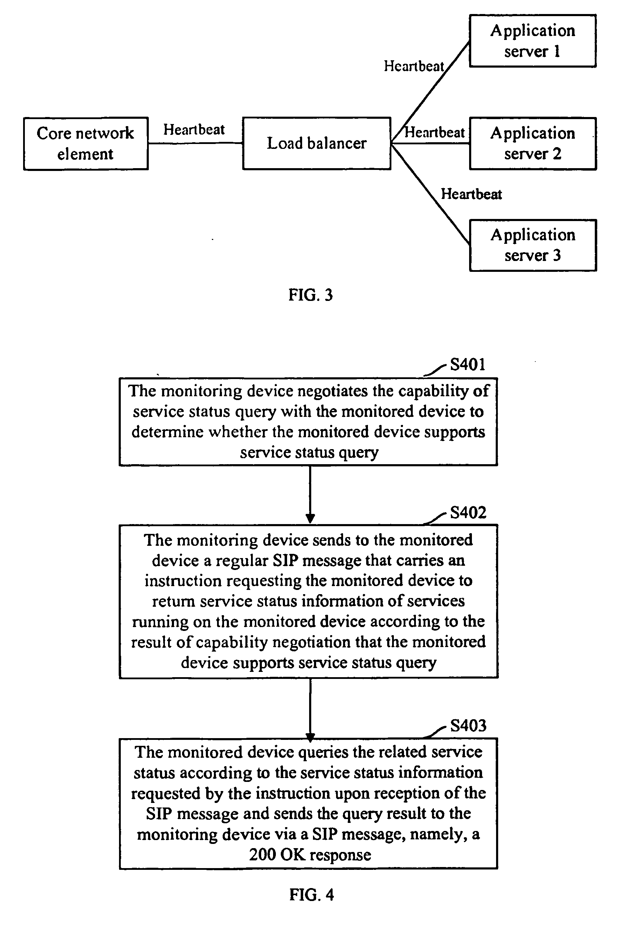

Based on the device level heartbeat detection mechanism shown in FIG. 2, a load balancer is added between the core network element and the application servers to balance the loads of all application servers. FIG. 3 is a schematic drawing illustrating the network structure of a device level heartbeat detection mechanism with load balancing. For monitoring of the core network element and the application servers, the core network element sends a heartbeat message to the load balancer and the load balancer forwards the message to all application servers. The application servers send respective heartbeat responses to the load balancer, which forwards the responses to the core network element. Likewise, if the core network element does not receive a response from one application server within a specified time, the core network element determines that the application server is unreachable and hands over service related messages previously processed by the application server to other application servers via the load balancer.

The inventor found that the conventional technologies, with or without a load balancer, are subject to the following defect: assume application server 1 that processes service 1 runs normally, or the route from the core network element to application server 1 is available, while the running of service 1 on application server 1 is abnormal; for example, service 1 is a prepaid service and application server 1 is a service control point that processes service 1, but the Home Location Register (HLR) that stores subscriber information fails so that service 1 cannot be provided; in this case, even if application server 1 sends a heartbeat response to the core network element in time, service 1 processed by application server 1 will not run normally. Because the core network element is unable to know that service 1 on application server 1 no longer runs normally, the core network element will still send messages related to service 1 to application server 1 so that service 1 cannot be provided normally.
ROACH DYNAMICSOFT A B: " Session Initiation Protocol (SIP)-Specific Event Notification; rfc3265.txt" IETF STANDARD, INTERNET ENGINEERING TASK FORCE, IETF, CH, 1 June 2002 (2002-06-01), XP015009043 ISSN: 0000-0003 describes an extension to the Session Initiation Protocol (SIP). The purpose of this extension is to provide an extensible framework by which SIP nodes can request notification from remote nodes indicating that certain events have occurred.

### Summary of the Invention

According to the present invention a monitoring method, a monitored device, a monitoring device, and a monitoring system are provided so as to implement service level monitoring between a monitoring device and a monitored device.

As a first aspect of the invention the monitoring method includes:
sending, by a monitored device, service status information to a monitoring device via a SIP message according to an instruction requesting the monitored device to return service status information of services running on the monitored device to the monitoring device, wherein the service status information is written in parameter values of a Service-Status header field carried in a 200 OK response sent to the monitoring device, and deciding, by the monitoring device, to send service messages to the monitored device for processing according to the obtained service status information if the service runs in a normal state; otherwise deciding not to send service messages to the monitored device for processing.

As a second aspect of the invention the monitored device includes an instruction processing unit and a sending unit, where:
the instruction processing unit is adapted to query service status information according to an instruction requesting the monitored device to return service status information of services running on the monitored device to a monitoring device, the service status information is written in parameter values of a Service-Status header field carried in a 200 OK response sent to the monitoring device; and
the sending unit is adapted to send the service status information to the monitoring device via a SIP message.

As a third aspect of the invention the monitoring device includes a receiving unit, adapted to receive from a monitored device a SIP message that carries service status information of services running on the monitored device, where the service status information is written in parameter values of a Service-Status header field carried in a 200 OK response sent to the monitoring device, and the monitoring device deciding is further adapted to send services running in a normal state on the monitored device to the monitored device for processing according to the service status information; or deciding to prohibit sending services running in an abnormal state on the monitored device to the monitored device for processing.

As a fourth aspect of the invention the monitoring system includes a monitoring device as any one of claims 10-12 and a monitored device as any one of claims 7-9.

In the technical solution of the invention, the monitored device sends service status information of service running on the monitored device to the monitoring device via a SIP message so that the monitoring device is able to monitor the status of services running on the monitored device. Further, the monitoring device can decide whether to send related service messages to the monitored device for processing according to the obtained service status information. If the related service runs normally on the monitored device, the monitoring device will send the service messages to the monitored device for processing; otherwise, the monitoring device will not send the service messages to the monitored device for processing. Thus, when the monitored device runs normally while the status of a service running on the monitored device is abnormal, the monitoring device will not send messages related to the service to the monitored device for processing so as to assure normal provision of the service and save transport resources with a better user experience.

### Brief Description of the Drawings

FIG 1 is a schematic drawing illustrating the network structure of a SIP-based device level heartbeat detection mechanism in the conventional technology;

FIG 2 is a schematic drawing illustrating the network structure of a device level heartbeat detection mechanism where services are deployed in redundancy in the conventional technology;

FIG. 3 is a schematic drawing illustrating the network structure of a device level heartbeat detection mechanism with load balancing in the conventional technology,

FIG. 4 is a flowchart for implementing service level heartbeat detection according to an embodiment of the invention;

FIG. 5 is a schematic drawing illustrating message interaction between a monitoring device and a monitored device in steps S402 and S403;

FIG. 6 is a schematic drawing illustrating the structure of a monitored device according to an embodiment of the invention;

FIG 7 is a schematic drawing illustrating the structure of a monitoring device according to an embodiment of the invention; and

FIG 8 is a schematic drawing of the structure of a SIP-based service status monitoring system according to an embodiment of the invention.

### Detailed Description of the Embodiments

The technical solution of the embodiments of the invention will be described in detail with reference to the accompanying drawings.

The device level heartbeat detection mechanism between a monitoring device (e.g., a core network element) and a monitored device (e.g., an application server) inevitably sends messages related to a service to the application server even if the service runs abnormally on the application server, because the mechanism is concerned about device-to-device monitoring other than the running status of services on the monitored device.

In an embodiment of the invention, the monitoring device will not only know whether the route to the monitored device is available but also monitor the status of services running on the monitored device. This means the monitored device may send a SIP message to the monitoring device to return status information of services running the monitored device so that the monitoring device is able to monitor the status of services running on the monitored device. Further, the monitoring device can decide whether to send the services to the monitored device for processing on the basis of the obtained service status information. For example, if the service status information obtained by the monitoring device indicates that all or part of services run normally on the monitored device, the monitoring device can send messages related the normal services to the monitored device for processing according to the monitoring result; if the monitoring device knows that the status of one service running on the monitored device is abnormal, the monitoring device will no longer send messages related to the service to the monitored device for processing. In this way, the monitoring device will not send messages related to a service running abnormally on the monitored device that runs normally so as to assure normal provision of the service and save transport resources with a better user experience.

Further, to ensure that the monitoring device monitors the status of services running on the monitored device in a near real-time manner, such as periodical monitoring, the monitored device may send service status information to the monitoring device via periodical SIP messages. Accordingly, the near real-time monitoring solution where a monitoring device monitors the status of services running on a monitored device according to the embodiments of the invention may be described as a service level heartbeat detection mechanism.

In an embodiment of the invention, a service level heartbeat detection can still be realized based on SIP. In practice, a Service-Status header field may be added to a SIP OPTIONS message. The monitoring device or the monitored device modifies the value of the header field to notify the peer end of information related to a service status query. Accordingly, in the embodiment of the invention, the monitoring device and the monitored device must support service status query, which means they must support the Service-Status header field extended in the SIP message. SIP messages that support the Service-Status header field are given in Table 1 (where R stands for request, r for response and o for optional).

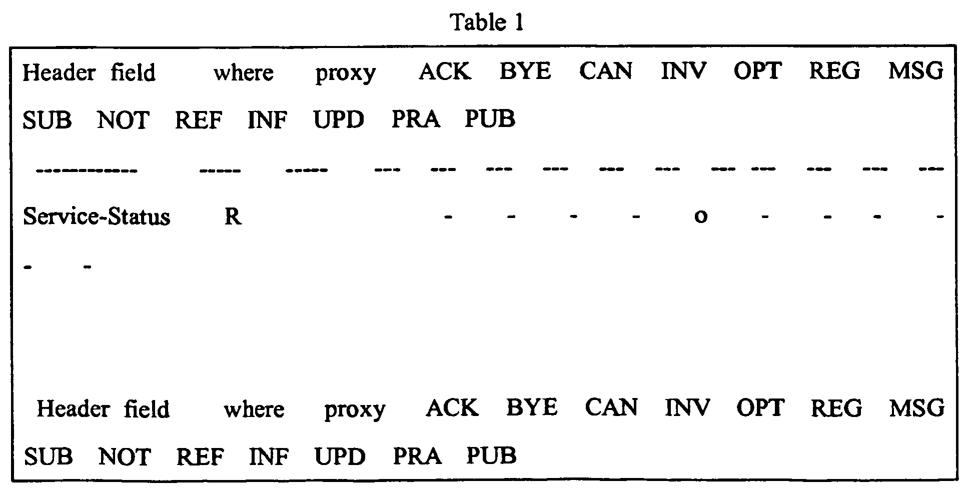

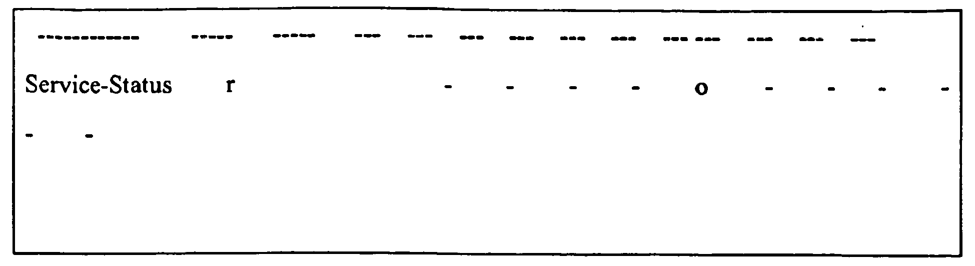

From Table 1, it can be known that the Service-Status header field added to an OPTIONS message is optional, marked by "o" in Table 1 in an embodiment of the present invention. The Service-Status header field can be carried in an OPTIONS request message, marked by "R" in Table 1 and an OPTIONS response message, marked by "r" in Table 1.

For example, a syntactic rule for describing the Service-Status header field in the Backus-Naur Form (BNF) is as follows. The syntactic rule complies with the SIP standard. The syntactic rule may include:
Service-Status = "Service-Status" HCOLON service-param *(SEMI Service-param)
service-param = status-param / query-param
status-param = "sn=" service-name COMMA "s=" status
service-name = quoted-string
status = "active" / "inactive" / "error" / "load" / "unload" / quoted-string
query-param = "qsn=" service-name / "qs=" status

The syntactic rule normalizes the Service-Status header field, where service-param may be status-param or query-param; status-param may include service-name and status and the syntactic rules are respectively "sn=" and "s="; the service-name may be any string of characters; the status may be "active", "inactive", "error", "load", "unload" or any string for extension of a possible status other than the listed.

In an embodiment of the present invention, the monitored device may know the instruction requiring the monitored device to return status of services running on the monitored device in two approaches. In the first approach, the monitoring device sends the instruction to the monitored device via a SIP message in a regular or irregular manner similar to the method where a core network element sends a heartbeat message to an application server in a conventional technology; accordingly, the monitored device returns requested service status information to the monitoring device regularly or irregularly. In the second approach, the instruction may be configured for the monitored device in advance so that it is unnecessary for the monitoring device to send a SIP message that carries the instruction. For example, the monitored device may be set to return status information of all or part of services running on the monitored device to the monitoring device on a regular or irregular basis. The service status information may include the service name and status.

A procedure for implementing service level heartbeat detection in an embodiment of the invention is described in detail, where the monitored device sends service status information to the monitoring device via SIP messages according to instructions regularly received from the monitoring device.

FIG 4 gives a flowchart of a service level heartbeat detection procedure according to an embodiment of the present invention. The procedure includes the following steps:

S401: The monitoring device negotiates the capability of service status query with the monitored device to determine whether the monitored device supports service status query.

Before the monitoring device monitors the service status on the monitored device by means of service level heartbeat detection, the monitoring device cannot obtain whether the monitored device supports service status query. Therefore, preferably, capability negotiation is carried out between the two devices in this step. The specific negotiation procedure may be: the monitoring device sends a SIP OPTIONS message to the monitored device, for example:
OPTIONS sip:carol@chicago.com SIP/2.0
   Via:SIP/2.0/UDP devicel.huawei.com;branch=z9hG4bKhjhs8ass877
   Max-Forwards: 70
   To: <sip:devicel@huawei.com>
   From: <sip: device2@huawei.com>;tag=1928301774
   Call-ID: a84b4c76e66710
   CSeq: 1 OPTIONS
Supported: Service-Status

The Service-Status specified in the Supported header field carried in the OPTIONS message notifies the monitored device that the monitoring device supports service status query. If the monitored device supports service status query, the monitored device sends a 200 OK response to the monitoring device, for example:
SIP/2.0 200 OK
   Via:SIP/2.0/UDP device1.huawei.com;branch=z9hG4bKhjhs8ass877; received=192.0.2.4
   Max-Forwards: 70
   To: <sip:devicel@huawei.com>;tag=a6hu890
   From: <sip: device2@huawei.com>;tag=1928301774
   Call-ID: a84b4c76e66710
   CSeq: 1 OPTIONS
   Allow: INVITE, ACK, CANCEL, OPTIONS, BYE
   Accept: application/sdp
   Supported: Service-Status
   Service-Status: sn=pps,s=active; sn=vpn,s=active

The Supported header field parameter carried in the 200 OK message is Service-Status, indicating the monitored device supports service status query. The parameter values of the Service-Status header field are: sn=pps (service name: prepaid service), s=active (status: normal running); sn=vpn (service name: virtual private network), s=active (status: normal running).

lt is understandable that the parameter values of the Service-Status header field may not be carried in the 200 OK response returned by the monitored device to the monitoring device. This means so long as the value of Supported is Service-Status in the 200 OK message returned by the monitored device, even if the parameters of Service-Status are null, the monitoring device can still determine that the monitored device supports service status query. Alternatively, the monitored device may be set to carry parameter values of the Service-Status header field in the 200 OK message so that the monitoring device knows the status of services running on the monitored device directly upon reception of the 200 OK message.

Therefore, in the embodiments of the present invention, the monitoring device and the monitored device may negotiate the capability of service status query in two approaches:

In the first approach, the monitoring device sends to the monitored device a SIP message that carries a mark that indicates the monitoring device supports service status query, which is a Supported header field with a Service-Status value; it may be set as follows: upon reception of the SIP message, if the monitored device supports service status query, the monitored device regards the SIP message as an instruction requesting the monitored device to return status information of services running on the monitored device to the monitoring device and sends to the monitoring device a 200 OK response message which carries parameter values of the Service-Status header field while notifying the monitoring device that the monitored device supports service status query; according to the presetting, the related service status information means status information of all services running on the monitored device or status information of services currently active on the monitored device.

In the second approach, the monitoring device sends to the monitored device a SIP message that carries a mark that indicates the monitoring device supports service status query; the monitored device, upon reception of the SIP message, sends to the monitoring device a 200 OK response which carries a mark indicating the monitored device supports service status query. The mark may be a Supported header field with a Service-Status value.

If the monitored device does not support service status query, the monitored device may be a device that only supports device level heartbeat detection. According to the SIP-based device level heartbeat detection mechanism in the conventional technology, when the route from the monitoring device to the monitored device is available, upon reception of a SIP message which carries a Supported header field with a Service-Status value from the monitoring device, the monitored device will also send to the monitoring device a 200 OK response which, however, does not carry a Service-Status header field, indicating the monitored device does not support service status query. Therefore, the service level heartbeat detection in the embodiments of the present invention may on the one hand be implemented on the basis of the SIP-based device level heartbeat detection mechanism with an extended header field added to a SIP message, and on the other hand, may be compatible with a monitoring device or a monitored device that does not support service status query.

S402 and S403: According to the negotiation result that the monitored device supports service status query, the monitoring device sends to the monitored device in a regular manner a SIP message which carries an instruction requesting the monitored device to return status information of services running on the monitored device to the monitoring device; upon reception of the SIP message, the monitored device queries the status of related services according to the service status information requested by the instruction and sends the query result to the monitoring device via a SIP message, namely, a 200 OK response.

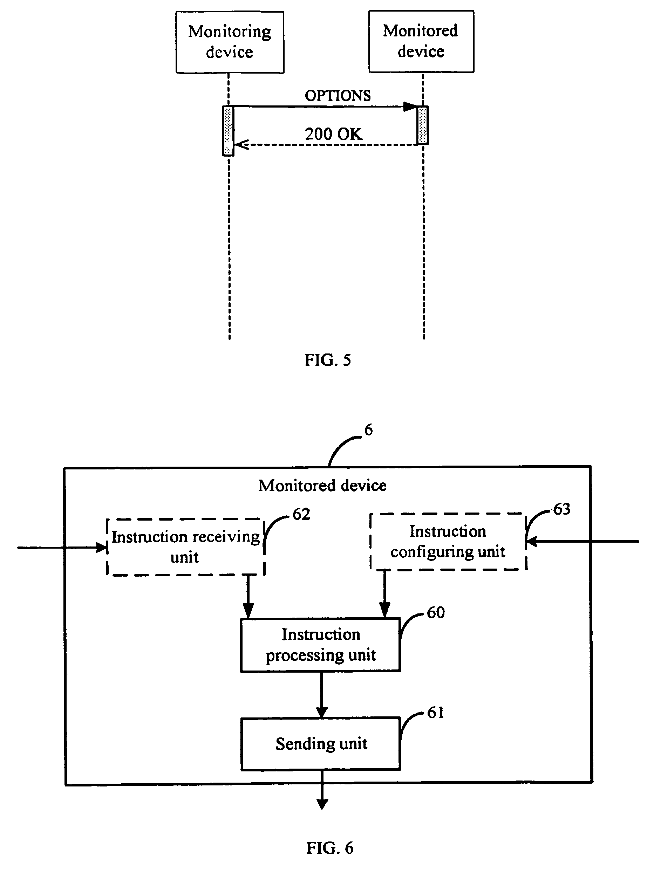

FIG 5 is a schematic drawing illustrating the message interaction between the monitoring device and the monitored device in steps S402 and S403.

In an embodiment of the present invention, the monitoring device may assign a parameter value to the Service-Status header field so that the parameter value carries the instruction. The instruction may request the status of a specified service, or request names of services in a specified status, or the status of all services.

If the monitoring device needs to monitor the status of a specified service running on the monitored device, the monitoring device may send a SIP OPTIONS message as below to the monitored device:
OPTIONS sip:carol@chicago.com SIP/2.0
   Via:SIP/2.0/UDP device1.huawei.com;branch=z9hG4bKhjhs8ass877
   Max-Forwards: 70
   To: <sip:device1@huawei.com>
   From: <sip: device2@huawei.com>;tag=1928301778
   Call-ID: a84b4c76e667564
   CSeq: 123 OPTIONS
   Supported: Service-Status
Service-Status: qsn=pps

The SIP message carries a Service-Status header field, where the parameter value carries an instruction requesting the monitored device to return status information of the service named pps.

Accordingly, when the monitored device receives the SIP message, the monitored device returns the related service status information to the monitoring device via a 200 OK message as below:
SIP/2.0 200 OK
   Via:SIP/2.0/UDP device1.huawei.com;branch=z9hG4bKhjhs8ass877; received=192.0.2.4
   Max-Forwards: 70
   To: <sip:device1@huawei.com>;tag=a6hu8876
   From: <sip: device2@huawei.cocn>;tag=19283017749
   Call-ID: a84b4c76e667564
   CSeq: 123 OPTIONS
   Allow: INVITE, ACK, CANCEL, OPTIONS, BYE
   Accept: application/sdp
   Supported: Service-Status
Service-Status: sn=pps,s=active

In the 200 OK response message, the monitored device writes the related service status information into the parameter value of the Service-Status header field; that is, the status of the service with sn=pps is active, indicating the pps service is running normally.

If the monitoring device needs to monitor services in a specified status running on the monitored device, the monitoring device may send a SIP OPTIONS message as below to the monitored device:
OPTIONS sip:carol@chicago.com SIP/2.0
   Via:SIP/2.0/UDP device1.huawei.com;branch=z9hG4bKhjhs8ass877
   Max-Forwards: 70
   To: <sip:device1@huawei.com>
   From: <sip: device2@huawei.com>;tag=1928301778
   Call-ID: a84b4c76e667555
   CSeq: 130 OPTIONS
   Supported: Service-Status
Service-Status: qs=active

The SIP message carries a Service-Status header field, where the parameter value carries an instruction requesting the monitored device to return all services in the active status.

Accordingly, when the monitored device receives the SIP message, the monitored device returns the related service status information to the monitoring device via a 200 OK message as below:
SIP/2.0 200 OK
Via:SIP/2.0/UDP device1.huawei.com;branch=z9hG4bKhjhs8ass877; received=1 92.0.2.4
Max-Forwards: 70
To: <sip:device1@huawei.com>;tag=a6hu8843
From: <sip: device2@huawei.com>;tag=19283017777
Call-ID: a84b4c76e667555
CSeq: 130 OPTIONS
Allow: INVITE, ACK, CANCEL, OPTIONS, BYE
Accept: application/sdp
Supported: Service-Status
Service-Status: sn=pps,s=active; sn=vpn,s=active

In the 200 OK response message, the monitored device writes the related service status information into the parameter values of the Service-Status header field, indicating services in the active status include pps and vpn.

In an embodiment of the present invention, when the monitoring device requests the monitored device to return status information of all services, it may be set as follows: if the message from the monitoring device does not carry a Service-Status header field or does not carry parameter values in the Service-Status header field, the monitoring device requests to query the status of all services. This is like the negotiation about the capability of service status query between the monitoring device and the monitored device as previously described herein.

In an embodiment of the present invention, when the monitored device returns related service status information to the monitoring device directly according to a configured instruction requesting the monitored device to return service status information of services on the monitored device to the monitoring device, the monitored device may also send related service status information to the monitoring device via a SIP message which carries a Service-Status header field, with the related service status information written in parameter values of the Service-Status header field, so that the monitoring device can monitor services running on the monitored device.

Accordingly, a monitored device is provided in an embodiment of the invention. FIG 6 is a schematic drawing illustrating the structure of a monitored device 6. The monitored device 6 includes an instruction processing unit 60, a sending unit 61, an instruction receiving unit 62 and an instruction configuring unit 63.

The instruction processing unit 60 is adapted to query service status information according to an instruction requesting the monitored device to return service status information of services running on the monitored device to a monitoring device.

The sending unit 61 is adapted to send the service status information to the monitoring device via a SIP message.

The instruction receiving unit 62 is adapted to receive from the monitoring device a SIP message that carries an instruction requesting the monitored device to return service status information of services running on the monitored device to the monitoring device.

The instruction configuring unit is adapted to configure the instruction for the monitored device in advance.

In this embodiment, the sending unit 61 of the monitored device 6 may be further adapted to send a SIP message that carries a mark indicating the monitored device supports service status query to the monitoring device so as to notify the monitoring device that the monitored device supports service status query when the monitoring device negotiates the capability of service status query with the monitored device 6 while the monitored device 6 is not required to directly return service status information.

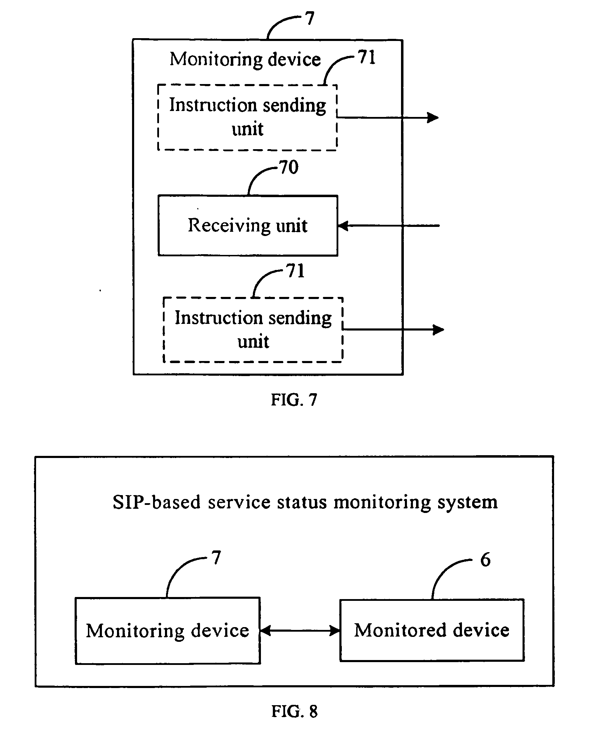

Accordingly, a monitoring device 7 is provided in an embodiment of the invention. FIG 7 is a schematic drawing illustrating the structure of the monitoring device 7. The monitoring device 7 includes: a receiving unit 70, adapted to receive from the monitored device 6 a SIP message that carries service status information of services running on the monitored device 6.

In practice, if it is necessary for the monitoring device 7 to send to the monitored device 6 an instruction requesting the monitored device 6 to return service status information of services running on the monitored device 6, the monitoring device 7 may further include an instruction sending unit 71, adapted to send the instruction requesting the monitored device 6 to return service status information of services running on the monitored device 6 to the monitored device 6 via a SIP message.

The monitoring device 7 may further include a capability negotiating unit 72, adapted to send a SIP message that carries a mark indicating the monitoring device 7 supports service status query to the monitored device 6; accordingly, the receiving unit 70 may be further adapted to receive from the monitored device 6 a SIP message that carries a mark indicating the monitored device 6 supports service status query.

According to the presetting, the SIP message sent by the instruction sending unit 7 may carry a Service-Status header field with parameter values specifying service status information that the monitored device 6 is requested to return. If, according to the presetting, the monitored device 6 sends related service status information, such as status information of all services, to the monitoring device 7 upon reception of the SIP message by default, the Service-Status header field in the SIP message may be null. In this case, the instruction sending unit 71 may function as the capability negotiating unit 72; otherwise, the instruction sending unit 71 may not play the role of the capability negotiating unit 72.

A SIP-based service status monitoring system is provided in an embodiment of the invention. FIG 8 is a schematic drawing illustrating the structure of the system. The system includes a monitoring device 7 and a monitored device 6.

To sum up, in the technical solution of the SIP-based service status monitoring method, devices and system according to the embodiments of the invention, the monitored device sends service status information of services running on the monitored device to the monitoring device via a SIP message according to an instruction so that the monitoring device can monitor the service status of services running on the monitored device. Further, the monitoring device can decide whether to send related service messages to the monitored device for processing according to the obtained service status information. If the related service runs normally on the monitored device, the monitoring device will send the service messages to the monitored device for processing; otherwise, the monitoring device will not send the service messages to the monitored device for processing. Thus, when the monitored device runs normally while the status of a service running on the monitored device is abnormal, the monitoring device will not send messages related to the service to the monitored device for processing so as to assure normal provision of the service and save transport resources with a better user experience.

In addition, in the embodiments of the invention, monitoring of service status is implemented based on SIP messages. Few changes are made to existing devices. The service status monitoring solution in the embodiments of the invention is also compatible with existing devices that do not support SIP messages that carry the Service-Status header field.

Through the foregoing embodiments, it is understandable to those skilled in the art that the embodiments of the invention may be implemented through software and a necessary general hardware platform or through hardware only. However, in most cases, software and a general hardware platform are preferred. Based on such understanding, the technical solution of the invention or contributions to the prior art can be embodied by a software product. The software product is stored in a storage medium and incorporates several instructions to instruct a computer device, for example, a personal computer, a server, or a network device, to execute the method provided by each embodiment of the invention.

Although the invention has been described through several exemplary embodiments, the invention is not limited to such embodiments. It is apparent that those skilled in the art can make various modifications and variations to the invention without departing from the scope of the invention. The invention is intended to cover such modifications and variations provided that they fall in the scope of protection defined by the following claims or their equivalents.

## Claims

1. A monitoring method, **characterized by** comprising:
sending, by a monitored device, service status information to a monitoring device via a Session Initiation Protocol, SIP, message according to an instruction requesting the monitored device to return service status information of services running on the monitored device to the monitoring device, wherein the service status information is written in parameter values of a Service-Status header field carried in a 200 OK response sent to the monitoring device, and;
deciding, by the monitoring device, to send service messages to the monitored device for processing according to the obtained service status information if the service runs in a normal state; otherwise deciding not to send service messages to the monitored device for processing.

2. The method of claim 1, wherein before the step of sending service status information to the monitoring device via the SIP message, the method further comprises:
receiving, by the monitored device, a SIP message that carries the instruction from the monitoring device; or
configuring the instruction for the monitored device in advance.

3. The method of claim 1 or 2, wherein the service status information comprises: service name and/or service status; and the instruction comprises:
requesting to return status of a specified service; or
requesting to return a service name of a specified status; or
requesting to return status of all services.

4. The method of claim 1 or 2, wherein the step of sending service status information to the monitoring device via the SIP message comprises:
sending the service status information to the monitoring device via the SIP message at a regular interval.

5. The method of claim 1 or 2, wherein before the step of sending service status information to the monitoring device via the SIP message, the method further comprises:
negotiating, by the monitoring device and the monitored device, the capability of service status query.

6. The method of claim 5, wherein the capability negotiation comprises:
by the monitored device, receiving from the monitoring device a SIP message that carries a mark indicating the monitoring device supports service status query, and returning to the monitoring device a SIP message that carries a mark indicating the monitored device supports service status query.

7. A monitored device (6), **characterized by** comprising an instruction processing unit (60) and a sending unit (61), wherein:
the instruction processing unit (60) is adapted to query service status information according to an instruction requesting the monitored device (6) to return service status information of services running on the monitored device (6) to a monitoring device (7), the service status information is written in parameter values of a Service-Status header field carried in a 200 OK response sent to the monitoring device; and
the sending unit (61) is adapted to send the service status information to the monitoring device (7) via a Session Initiation Protocol (SIP) message.

8. The monitored device of claim 7, further comprising:
an instruction receiving unit (62), adapted to receive from the monitoring device (7) a SIP message that carries an instruction requesting the monitored device (6) to return service status information of services running on the monitored device (6) to the monitoring device (7); or
an instruction configuring unit (63), adapted to configure the instruction for the monitored device (6) in advance.

9. The monitored device of claim 8, wherein the sending unit (61) is further adapted to send a SIP message that carries a mark indicating the monitored device (6) supports service status query to the monitoring device (7).

10. A monitoring device (7), **characterized by** comprising:
a receiving unit (70), adapted to receive from a monitored device a Session Initiation Protocol (SIP) message that carries service status information of services running on the monitored device (6), wherein the service status information is written in parameter values of a Service-Status header field carried in a 200 OK response sent to the monitoring device, and;
the monitoring device (7) is further adapted to decide to send service messages if the services running in a normal state on the monitored device (6) to the monitored device (6) for processing according to the service status information; or to decide not to send service messages if the services running in an abnormal state on the monitored device (6) to the monitored device (6) for processing.

11. The monitoring device of claim 10, further comprising:
an instruction sending unit (71), adapted to send to the monitored device (6) an instruction requesting the monitored device (6) to return service status information of services running on the monitored device (6) via a SIP message.

12. The monitoring device of claim 11, further comprising:
a capability negotiating unit (72), adapted to send a SIP message that carries a mark indicating the monitoring device (7) supports service status query to the monitored device (6); and
the receiving unit (70), further adapted to receive from the monitored device (6) a SIP message that carries a mark indicating the monitored device (6) supports service status query.

13. A monitoring system, comprising a monitoring device (7) as any one of claims 10 - 12 and a monitored device (6) as any one of claims 7 - 9.

## Patentansprüche

1. Überwachendes Verfahren, **gekennzeichnet durch** die folgenden Schritte:
Senden von Dienststatusinformationen **durch** eine überwachte Einrichtung zu einer überwachenden Einrichtung über eine Nachricht des Session Initiation Protocol SIP gemäß einer Anweisung, die anfordert, dass die überwachte Einrichtung Dienststatusinformationen von auf der überwachten Einrichtung ablaufenden Diensten an die überwachende Einrichtung zurückgibt, wobei die Dienststatusinformationen in Parameterwerten eines Service-Status-Header-Felds geschrieben werden, das in einer zu der überwachenden Einrichtung gesendeten Antwort 200 OK geführt wird; und
Entscheiden **durch** die überwachende Einrichtung, Dienstnachrichten zur Verarbeitung gemäß den erhaltenen Dienststatusinformationen zu der überwachten Einrichtung zu senden, wenn der Dienst in einem Normalzustand läuft; andernfalls Entscheiden, keine Dienstnachrichten zur Verarbeitung zu der überwachten Einrichtung zu senden.

2. Verfahren nach Anspruch 1, wobei das Verfahren vor dem Schritt des Sendens von Dienststatusinformationen zur der überwachenden Einrichtung über die SIP-Nachricht ferner Folgendes umfasst:
Empfangen einer SIP-Nachricht, die die Anweisung von der überwachenden Einrichtung führt, durch die überwachte Einrichtung; oder
Konfigurieren der Anweisung für die überwachte Einrichtung im Voraus.

3. Verfahren nach Anspruch 1 oder 2, wobei die Dienststatusinformationen Folgendes umfassen:
Dienstname und/oder Dienststatus; und die Anweisung Folgendes umfasst:
Anforderung, den Status eines spezifizierten Dienstes zurückzugeben; oder
Anfordern, einen Dienstnamen eines spezifizierten Status zurückzugeben; oder
Anfordern, den Status aller Dienste zurückzugeben.

4. Verfahren nach Anspruch 1 oder 2, wobei der Schritt des Sendens von Dienststatusinformationen zu der überwachenden Einrichtung über die SIP-Nachricht Folgendes umfasst:
Senden der Dienststatusinformationen zu der überwachenden Einrichtung über die SIP-Nachricht in einem regelmäßigen Intervall.

5. Verfahren nach Anspruch 1 oder 2, wobei das Verfahren vor dem Schritt des Sendens von Dienststatusinformationen zu der überwachenden Einrichtung über die SIP-Nachricht ferner Folgendes umfasst:
Aushandeln der Fähigkeit der Dienststatusabfrage durch die überwachende Einrichtung und die überwachte Einrichtung.

6. Verfahren nach Anspruch 5, wobei die Fähigkeitsaushandlung Folgendes umfasst:
durch die überwachte Einrichtung: Empfangen einer SIP-Nachricht von der überwachenden Einrichtung, die eine Markierung führt, die angibt, dass die überwachende Einrichtung Dienststatusabfrage unterstützt, und Zurückgeben einer SIP-Nachricht an die überwachende Einrichtung, die eine Markierung führt, die angibt, dass die überwachte Einrichtung Dienststatusabfrage unterstützt.

7. Überwachte Einrichtung (6), **dadurch gekennzeichnet, dass** sie eine Anweisungsverarbeitungseinheit (60) und eine Sendeeinheit (61) umfasst, wobei die Anweisungsverarbeitungseinheit (60) dafür ausgelegt ist, Dienststatusinformationen gemäß einer Anweisung abzufragen, die anfordert, dass die überwachte Einrichtung (6) Dienststatusinformationen von auf der überwachten Einrichtung (6) ablaufenden Diensten an eine überwachende Einrichtung (7) zurückgibt, wobei die Dienststatusinformationen in Parameterwerte eines Service-Status-Header-Felds geschrieben werden, das in einer zu der überwachenden Einrichtung gesendeten Antwort 200 OK geführt wird; und
die Sendeeinheit (61) dafür ausgelegt ist, die Dienststatusinformationen über eine Nachricht des Session Initiation Protocol (SIP) zu der überwachenden Einrichtung (7) zu senden.

8. Überwachte Einrichtung nach Anspruch 7, ferner umfassend:
eine Anweisungsempfangseinheit (62), die dafür ausgelegt ist, von der überwachenden Einrichtung (7) eine SIP-Nachricht zu empfangen, die eine Anweisung führt, die anfordert, dass die überwachte Einrichtung (6) Dienststatusinformationen von auf der überwachten Einrichtung (6) ablaufenden Diensten an die überwachende Einrichtung (7) zurückgibt; oder
eine Anweisungskonfigurationseinheit (63), die dafür ausgelegt ist, die Anweisung für die überwachte Einrichtung (6) im Voraus zu konfigurieren.

9. Überwachte Einrichtung nach Anspruch 8, wobei die Sendeeinheit (61) ferner dafür ausgelegt ist, eine SIP-Nachricht zu der überwachenden Einrichtung (7) zu senden, die eine Markierung führt, die angibt, dass die überwachte Einrichtung (6) Dienststatusabfrage unterstützt.

10. Überwachende Einrichtung (7), **dadurch gekennzeichnet, dass** sie Folgendes umfasst:
eine Empfangseinheit (70), die dafür ausgelegt ist, von einer überwachten Einrichtung eine Nachricht des Session Initiation Protocol (SIP) zu empfangen, die Dienststatusinformationen von auf der überwachten Einrichtung (6) ablaufenden Diensten führt, wobei die Dienststatusinformationen in Parameterwerte eines Service-Status-Header-Felds geschrieben werden, das in einer zu der überwachenden Einrichtung gesendeten Antwort 200 OK geführt wird; und
die überwachende Einrichtung (7) ferner dafür ausgelegt ist, zu entscheiden, Dienstnachrichten zur Verarbeitung gemäß den Dienststatusinformationen zu der überwachten Einrichtung (6) zu senden, wenn die Dienste in einem Normalzustand auf der überwachten Einrichtung (6) ablaufen; oder zu entscheiden, keine Dienstnachrichten zur Verarbeitung zu der überwachten Einrichtung (6) zu senden, wenn die Dienste in einem abnormen Zustand auf der überwachten Einrichtung (6) ablaufen.

11. Überwachende Einrichtung nach Anspruch 10, ferner umfassend:
eine Anweisungssendeeinheit (71), die dafür ausgelegt ist, über eine SIP-Nachricht eine Anweisung zu der überwachten Einrichtung (6) zu senden, die anfordert, dass die überwachte Einrichtung (6) Dienststatusinformationen von auf der überwachten Einrichtung (6) ablaufenden Diensten zurückgibt.

12. Überwachende Einrichtung nach Anspruch 11, ferner umfassend:
eine Fähigkeitsaushandlungseinheit (72), die dafür ausgelegt ist, eine SIP-Nachricht, die eine Markierung führt, die angibt, dass die überwachende Einrichtung (7) Dienststatusabfrage unterstützt, zu der überwachten Einrichtung (6) zu senden; und die Empfangseinheit (70), die ferner dafür ausgelegt ist, von der überwachten Einrichtung (6) eine SIP-Nachricht zu empfangen, die eine Markierung führt, die angibt, dass die überwachte Einrichtung (6) Dienststatusabfrage unterstützt.

13. Überwachendes System, das eine überwachende Einrichtung (7) nach einem der Ansprüche 10 bis 12 und eine überwachte Einrichtung (6) nach einem der Ansprüche 7 bis 9 umfasst.

## Revendications

1. Procédé de surveillance, **caractérisé en ce qu'**il comprend :
l'envoi, par un dispositif surveillé, d'informations d'état de service, à un dispositif de surveillance par l'intermédiaire d'un message de Protocole de Lancement de Session, SIP, en fonction d'une instruction demandant au dispositif surveillé de renvoyer des informations d'état de service de services exécutés sur le dispositif surveillé au dispositif de surveillance, dans lequel les informations d'état de service sont écrites dans des valeurs paramétriques d'un champ d'en-tête d'Etat de Service porté dans une réponse 200 OK envoyée au dispositif de surveillance, et ;
la décision, par le dispositif de surveillance, d'envoyer des messages de service au dispositif surveillé en vue de leur traitement en fonction des informations d'état de service obtenues si le service fonctionne dans un état normal ; si non la décision de ne pas envoyer de messages de service au dispositif surveillé en vue de leur traitement.

2. Procédé selon la revendication 1, comprenant en outre avant l'étape d'envoi d'informations d'état de service au dispositif surveillé par l'intermédiaire du message SIP,
la réception, par le dispositif surveillé, d'un message SIP qui porte l'instruction provenant du dispositif de surveillance ; ou
la configuration anticipée de l'instruction du dispositif surveillé.

3. Procédé selon la revendication 1 ou 2, dans lequel les informations d'état de service comprennent : le nom du service et /ou l'état du service ; et l'instruction comprend :
la demande de renvoyer l'état d'un service spécifié ; ou
la demande de renvoyer un nom de service d'un état spécifié ; ou
la demande de renvoyer l'état de tous les services.

4. Procédé selon la revendication 1 ou 2, dans lequel l'étape d'envoi d'informations d'état de service au dispositif surveillé par l'intermédiaire du message SIP comprend :
l'envoi des informations d'état de service au dispositif de surveillance par l'intermédiaire du message SIP à intervalles réguliers.

5. Procédé selon la revendication 1 ou 2, comprenant en outre, avant l'étape d'envoi des informations d'état de service au dispositif de surveillance par l'intermédiaire du message SIP :
la négociation, par le dispositif de surveillance et le dispositif surveillé, de la capabilité d'interrogation d'état de service.

6. Procédé selon la revendication 5, dans lequel la négociation de capabilité comprend :
par le dispositif surveillé, la réception depuis le dispositif de surveillance d'un message SIP qui porte un marqueur indiquant que le dispositif de surveillance supporte l'interrogation d'état de service, et le renvoi au dispositif de surveillance d'un message SIP qui porte un marqueur indiquant que le dispositif surveillé supporte l'interrogation d'état de service.

7. Dispositif surveillé (6), **caractérisé en ce qu'**il comprend une unité de traitement d'instructions (60) et une unité d'envoi (61), dans lequel :
l'unité de traitement d'instructions (60) est adaptée pour interroger des informations d'état de service en fonction d'une instruction demandant au dispositif surveillé (6) de renvoyer des informations d'état de service de services exécutés sur le dispositif surveillé (6) à un dispositif de surveillance (7), les informations d'état de service étant écrites dans des valeurs paramétriques d'un champ d'en-tête d'Etat de Service porté dans une réponse 200 OK envoyée au dispositif de surveillance ; et
l'unité d'envoi (61) est adaptée pour envoyer les informations d'état de service au dispositif de surveillance (7) par l'intermédiaire d'un message de Protocole de Lancement de Session (SIP).

8. Dispositif surveillé selon la revendication 7, comprenant en outre :
une unité de réception d'instruction (62), adaptée pour recevoir du dispositif de surveillance (7) un message SIP qui porte une instruction demandant au dispositif surveillé (6) de renvoyer des informations d'état de service des services exécutés sur le dispositif surveillé (6) au dispositif de surveillance (7) ; ou
une unité de configuration d'instruction (63), configurée pour configurer de manière anticipée l'instruction du dispositif surveillé (6).

9. Dispositif surveillé selon la revendication 8, dans lequel l'unité d'envoi (61) est adaptée en outre pour envoyer au dispositif de surveillance (7) un message SIP qui porte un marqueur indiquant que le dispositif surveillé (6) supporte l'interrogation d'état de service.

10. Dispositif de surveillance (7), **caractérisé en ce qu'**il comprend :
une unité de réception (70), adaptée pour recevoir d'un dispositif surveillé un message de Protocole de Lancement de Session (SIP) qui porte des informations d'état de service de services exécutés sur le dispositif surveillé (6), les informations d'état de service étant écrites dans des valeurs paramétriques d'un champ d'en-tête d'Etat de Service porté dans une réponse 200 OK envoyée au dispositif de surveillance, et ;
le dispositif de surveillance (7) est adapté en outre pour décider d'envoyer des messages de services si les services sont exécutés dans un état normal sur le dispositif surveillé (6) au dispositif surveillé (6) en vue de leur traitement en fonction des informations d'état de service ; ou décider de ne pas envoyer de messages de services si les services sont exécutés dans un état anormal sur le dispositif surveillé (6) au dispositif surveillé (6) en vue de leur traitement.

11. Dispositif de surveillance selon la revendication 10, comprenant en outre :
une unité d'envoi d'instruction (71), adaptée pour envoyer au dispositif surveillé (6) une instruction demandant au dispositif surveillé (6) de renvoyer des informations d'état de service de services exécutés sur le dispositif surveillé (6) par l'intermédiaire d'un message SIP.

12. Dispositif de surveillance selon la revendication 11, comprenant en outre :
une unité de négociation de capabilité (72), adaptée pour envoyer au dispositif surveillé (6) un message SIP qui porte un marqueur indiquant que le dispositif de surveillance (7) supporte l'interrogation d'état de service ; et
l'unité de réception (70), adaptée en outre pour recevoir du dispositif surveillé (6) un message SIP qui porte un marqueur indiquant que le dispositif surveillé (6) supporte l'interrogation d'état de service.

13. Système de surveillance, comprenant un dispositif de surveillance (7) selon l'une quelconque des revendications 10 à 12, et un dispositif surveillé (6) selon l'une quelconque des revendications 7 à 9.
